# Europäisches Patentamt
# European Patent Office
# Office européen des brevets

(19)

(11) Veröffentlichungsnummer : **0 052 802**
**B1**

(12)

# EUROPÄISCHE PATENTSCHRIFT

(45) Veröffentlichungstag der Patentschrift :
**15.03.89**

(51) Int. Cl.⁴ : **G 05 B 19/405**

(21) Anmeldenummer : **81109228.7**

(22) Anmeldetag : **29.10.81**

(54) Verfahren und Vorrichtung zum Überwachen der Bearbeitungs-bedingungen an einer Werkzeugmaschine.

(30) Priorität : **20.11.80 DE 3043827**

(43) Veröffentlichungstag der Anmeldung :
**02.06.82 Patentblatt 82/22**

(45) Bekanntmachung des Hinweises auf die Patenterteilung : **15.03.89 Patentblatt 89/11**

(84) Benannte Vertragsstaaten :
**CH DE FR GB LI SE**

(56) Entgegenhaltungen :
**EP—A— 0 012 528**
**DE—A— 2 251 333**
**DE—A— 2 400 291**
**FR—A— 2 243 051**
**GB—A— 2 022 262**
**US—A— 3 836 834**
**US—A— 4 207 567**

(73) Patentinhaber : **Gildemeister AG**
**Morsestrasse 1**
**D-4800 Bielefeld (DE)**

(72) Erfinder : **Mattle, Hans-Peter**
**Buchenweg 4**
**D-7050 Waiblingen (DE)**
Erfinder : **Badur, Klaus**
**Scheelenkamp 14**
**D-3008 Garbsen 4 (DE)**

(74) Vertreter : **Schmidt-Evers, Jürgen, Dipl.-Ing. et al**
**Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10**
**D-8000 München 22 (DE)**

EP 0 052 802 B1

Jouve, 18, rue St-Denis, 75001 Paris, France

EP 0 052 802 B1

**Beschreibung**

Die Erfindung betrifft Verfahren und eine Vorrichtung nach dem Oberbegriff des Anspruchs 1,4 bzw. 5.

Der wachsende Einsatz von numerisch gesteuerten Drehmaschinen und die Tendenz zum Einsatz automatischer Werkstückbeschickungsanlagen bei Drehmaschinen fordern eine vom Bedienungspersonal unabhängige, selbsttätige Überwachung der Werkstückbearbeitung. Insbesondere besteht ein Bedürfnis für eine selbsttätige Werkzeugbruchkontrolle, um die bei Werkzeugbrüchen entstehenden großen Folgeschäden wie beispielsweise zerstörte Werkzeugträger, Zerstörung der Werkstückoberflächen oder gar die Zerstörung von ganzen Maschinenbauteilen zu verhindern.

Bei universellen Werkzeugmaschinen, bei denen nacheinander unterschiedlichste Werkstücke und Bearbeitungsoperationen eingesetzt werden, muß die Überwachungs- oder Kontrolleinrichtung für den jeweiligen Bearbeitungsprozeß geeignet sein. Demzufolge muß sie die Überwachung anhand von allgemein gültigen Grenzwerten durchführen können.

Ein aus der DDR-PS 105 739 bekanntes Verfahren geht davon aus, daß nach einem Werkzeugbruch ein Abfall der Schnittkraft auftritt, so daß durch eine fortlaufende Messung der Schnittkraft aus einem Abfall der Schnittkraft und einem anschließenden Anstieg auf einen höheren Wert als einem vorgegebenen Wert auf einen Werkzeugbruch geschlossen werden kann. Ein entsprechendes Verfahren ist in der europäischen Patentanmeldung 0 012 528 beschrieben. Dort ist eine Überwachung des Schnittkraftverlaufs durch Messen der Schnittkraft in regelmäßigen Zeitabständen vorgesehen, wobei von unmittelbar aufeinanderfolgenden Meßwerten des Schneidewiderstandes jeweils die Differenz gebildet wird, um anhand von Veränderungen dieser Differenz ein starkes Ansteigen oder Abfallen der Schnittkraft und damit einen Werkzeugbruch leichter erkennen zu können.

Neuere Untersuchungen (HGF-Kurzbericht 78/20), Industrieanzeiger Nr. 28 v. 07.04.1978) zeigen jedoch, daß der Zerspankraftverlauf, auf denen die erwähnten Verfahren beruhen, häufig nicht auftritt. Weiterhin hat sich gezeigt, daß bei Beschädigung des Werkzeuges sich die Vorschubkraft und die Rückkraft (Passivkraft) viel stärker ändern als die Hauptschnittkraft. Art und Ablauf eines Werkzeugbruches, seine Ursachen und Begleitumstände können in so vielfältiger Weise variieren, daß mit den bekannten Verfahren nicht alle Formen von Werkzeugbrüchen erfaßt werden.

Aus der GB-A 2 022 262 ist ein Verfahren und eine Vorrichtung zur Überwachung des Werkzeugzustandes zu entnehmen, bei dem bzw. mit der der Schneidewiderstand fortlaufend ermittelt und mit dem Verlauf eines jeweils bestimmten Schneidewiderstandes als Grenzwert verglichen sowie ein Warnsignal erzeugt wird, wenn der sich im Betrieb einstellende Schneidewiderstand den jeweiligen Grenzwert überschreitet.

Ein Verfahren und eine Vorrichtung der eingangs bezeichneten Art sind aus der DE-A 2 251 333 bekannt. Bei diesem bekannten Verfahren bzw. dieser bekannten Vorrichtung werden aus Meßwerten der Zerspankraftkomponenten Verhältniswerte von Vorschubkraft zur Hauptschnittkraft und von der Passivkraft (Rückkraft) zur Hauptschnittkraft gebildet werden. Die Verhältniswerte sind dann unabhängig vom Werkstoff und von der Schnitt-Tiefe. Bei jener Vorrichtung erfolgen zwei Vergleichsoperationen zur Erkennung eines Werkzeugbruchs. Einmal wird der tatsächliche Wert einer jeden Zerspankraftkomponente mit einem zugeordneten Grenzwert verglichen, zum anderen wird jeder der Verhältniswerte mit einem vorgegebenenen Verhältniswert verglichen. Dabei werden die Zerspankraftkomponenten und die erwähnten Verhältniswerte jeweils einmal pro Umdrehung immer in der gleichen Lage der Arbeitsspindel ermittelt. Mit diesem Verfahren läßt sich eine Vielzahl von Werkzeugbrüchen erkennen. Jedoch ist auch bei ihm die Fehlerquote noch zu hoch, um bei einer universellen, vollautomatischen Werkzeugmaschine eingesetzt werden zu können. Dies rührt daher, daß einzelne Störimpulse, die beispielsweise durch Lunker oder Abweichungen von der exakten Zylinderform verursacht werden, fälschlicherweise als Werkzeugbruch interpretiert werden und zu einem Abschalten der Werkzeugmaschine führen können. Weiterhin müssen bei diesem bekannten Verfahren die vorgegebenen Grenzwerte sehr dicht an dem Bereich der zulässigen Werte der Zerspankraftkomponenten liegen.

Bei den bekannten Verfahren treten insbesondere aufgrund von Unterschieden im Werkstoffgefüge z. B., von Lunkern, aufgrund von Formfehlern des Ausgangswerkstückes oder Rohteiles durch Absätze in der Außenkontur des Rohteils, durch Unterbrechungen des Schnitts sowie aufgrund von veränderten Bedingungen in den Anschnitt-/Freischnittbereichen Störungen auf, die einen Werkzeugbruch vortäuschen können oder die Erkennung eines Werkzeugbruches erschweren.

Der Erfindung liegt daher die Aufgabe zugrunde, ein Verfahren sowie eine Vorrichtung zum Überwachen der Bearbeitungsbedingungen an einer Werkzeugmaschine anzugeben, die mit vom speziellen Bearbeitungsprozeß unabhängigen Überwachungskriterien arbeiten kann und eine sichere Unterscheidung des Werkzeugbruchs von sonstigen störeinflüssen erlaubt.

Diese Aufgabe wird durch die kennzeichnenden Merkmale der Ansprüche 1, 4 bzw. 5 gelöst.

Vorteilhafte Weiterbildungen der erfindungsgemäß Verfahren und der erfindungsgemäßen Vorrichtung sind in den Unteransprüchen beschrieben.

Die Erfindung beruht auf folgenden Überlegungen :

Bei einem Überwachungssystem genügt es nicht, lediglich die Größe der einzelnen Zerspankraftkom-

EP 0 052 802 B1

ponenten zu messen und mit Grenzwerten zu vergleichen. Vielmehr müssen die Überwachungskriterien so gewählt werden, daß die Grenzwerte weitgehend unabhängig von unterschiedlichen Bearbeitungsbedingungen, sowie unterschiedlichen Werkstoff- und Rohteileinflüssen, sind. Um der Forderung nach allgemeingültigen Grenzwerten gerecht zu werden, müssen aus dem Verlauf der Zerspankraftkomponenten und deren Verhältniswerte über die Dauer einiger Werkstückumdrehungen entsprechende Überwachungskriterien abgeleitet werden.

Außerdem ist es zu sicheren Erfassung der verschiedenen Arten möglicher Werkzeugbrüche und deren unterschiedlicher Auswirkungen auf die Zerspankraftkomponenten erforderlich, diese gleichzeitig auf mehrere unterschiedliche Kriterien hin zu überwachen.

Die bisher eingesetzten Überwachungsverfahren waren anfällig gegenüber Schwankungen, die aufgrund von Lunkern oder Formfehlern im zu bearbeitenden Rohteil oder aufgrund von Unrundheiten in der Außenkontur des Rohtteils auftreten. Da solche Störungen mit der Spindeldrehzahl periodisch auftreten, können sie durch ein Auswertungsverfahren unterdrückt werden, das selbst periodisch mit der Spindeldrehzahl arbeitet. Hierzu werden die Werte der Zerspankraftkomponenten m-mal während einer Werkstückumdrehung ermittelt. Für die Auswertung der einzelnen Komponenten der Zerspankraft werden dann die Differenzen aus dem aktuellen Signalwert und dem Wert gebildet, der exakt eine Umdrehung zuvor auftrat. Schwankungen, die aufgrund von Lunkern oder ähnlichen Störungen im Signalwert vorliegen, subtrahieren sich bei der Differenzbildung heraus. Der Verlauf der Differenzwerte weist damit diese periodisch auftretenden Störungen nicht auf.

Für den Verlauf der Differenzen $\Delta F$ der einzelnen Zerspankraftkomponenten ergeben sich folgende Merkmale :

1. In dem durch eine Werkstückumdrehung gegebenen Intervall, das dem Werkzeugbruch vorausgeht, ist die Differenzfunktion $\Delta F$ ($\Delta F_v$, $\Delta F_r$, $\Delta F_s$) kleiner als ein bestimmter Wert.

2. In dem eine Werkstückumdrehung langen Intervall nach dem Zeitpunkt des Werkzeugbruchs ist die Differenzfunktion nahezu konstant, sie kann in der Mitte des Intervalls kleinere Werte als zu Anfang oder Ende des Intervalls aufweisen. Dies folgt daraus, daß bei dem Werkzeugbruch sprunghafte Änderungen in den Werten der Zerspankraftkomponenten auftreten.

3. In dem Intervall nach dem Werkzeugbruch ist die Differenzfunktion $\Delta F$ von 0 verschieden.

4. In dem Intervall nach dem Werkzeugbruch ist zu Beginn des Intervalls der Anstieg der Differenzfunktion schneller als bei Übergängen, die durch eine Änderung der Schnittbedingungen durch eine unrunde Werkstückkontur erzeugt werden.

Ein Werkzeugbruch liefert also für die Differenzfunktion $\Delta F$ eine Art Rechteckfunktion mit der zeitlichen Länge einer Werkstückumdrehung. Durch diese Charakterisierung der Differenzfunktion $\Delta F$ im Falle eines Werkstückbruchs kann eine Unterscheidung von anderen Verläufen der Differenzfunktion $\Delta F$, beispielsweise eine stetige Zunahme bis zu einem bestimmten Punkt und dann ein Abfallen, ein « Sägezahn »-Verlauf der Differenzfunktion, wie er beim normalen Anschnitt des Werkstücks auftritt, unterschieden werden.

Es ist festgestellt worden, daß bei der ersten Umdrehung des Anschnitts wie auch beim Freischneiden die Zerspankraftkomponenten einen Verlauf nehmen können, der der bei einem Werkzeugbruch auftretenden Form stark ähnelt. Aus diesem Grund wird die Auswertung der Differenzfunktion beim Vorliegen dieser Betriebszustände gesperrt.

Eine weitere Überlegung richtet sich auf die Änderung der Zerspankraftkomponenten im Falle eines Schnitttiefensprungs. In solchen Fällen kann sich der Kraftverlauf, der durch die Werkstückkontur bedingt wird, dem des Werkzeugbruchs überlagern, so daß der Werkzeugbruch nicht allein durch die Überwachung der Differenzfunktion $\Delta F$ erkannt werden kann. Eine Trennung des Bruchsignals durch die Ausnützung der Periodizität der übrigen Signale ist nicht möglich, da bei einer Schnittiefenänderung kein periodisches Signal erzeugt wird. Untersuchungen ergaben jedoch, daß bei einem Schnittiefensprung der Quotient $F_v/F_s$ konstant bleibt, sich jedoch bei einem gleichzeitigen Auftreten eines Werkstückbruches in der überwiegenden Mehrzahl der Fälle erheblich ändert. Daraus wird die Bedingung abgeleitet, daß durch eine Überwachung der relativen Änderung

$$\frac{\Delta (F_v/F_s)}{F_v/F_s}$$

die Erkennung eines Werkzeugbruches auch während einer Schnittiefenänderung ermöglicht wird.

Während Schnittiefenänderungen können jedoch auch Werkzeugbrüche auftreten, bei denen die relative Änderung des Quotienten $F_v/F_s$ aufgrund der Überlagerung der jeweiligen Kraftverläufe unter dem Grenzwert liegt, der für eine Werkzeugbruchmeldung überschritten werden muß. Grundsätzlich sind hierzu zwei Fälle zu unterscheiden. Ist der Einstellwinkel des Werkzeugs $\chi$ gleich 90 Grad, so bleibt bei einem Schnittiefensprung (d. h. bei einer bezüglich der Drehachse des Werkstücks axialen Verschiebung der Schneidkante) die Passivkraft annähernd konstant. Der Werkzeugbruch kann daher an der sprunghaften Änderung der Passivkraft erkannt werden. Im zweiten Fall, bei dem der Einstellwinkel $\chi$ von 90 Grad verschieden ist, ändert sich bei einem Schnittiefensprung auch die Passivkraft. Dagegen bleiben die Quotienten $F_v/F_s$ und $F_r/F_s$ nahezu konstant. In diesem Fall muß auch die relative Änderung des

3

Quotienten $F_r/F_s$ auf die Überschreitung zulässiger Grenzen überwacht werden.

Es werden jedoch vorteilhafterweise nicht nur die Verhältniswerte $F_v/F_s$ und $F_r/F_s$ überwacht, sondern zugleich auch die Absolutwerte der Zerspankraftkomponenten, da ein Überschreiten der zulässigen Grenzen zu Beschädigungen an der Werkzeugmaschine oder am Werkzeughalter führen kann.

Insgesamt zeigt sich also, daß eine Mehrfachmessung der Zerspankraftkomponenten innerhalb einer Werkstückumdrehung und die für diese vorgenommene Mittelwertbildung der Zerspankraftkomponenten Störeinflüsse, wie sie aus unterbrochenem Schnitt, Abweichungen von der Zylindrizität und von Lunkern herrühren, ausschaltet. Die Berücksichtigung der Differenzen $\Delta F$ der einzelnen Zerspankraftkomponenten führt zu einem wesentlich schärfer gefaßten Brucherkennungs-Kriterium als es bisher durch Bildung der Verhältniswerte $F_v/F_s$, $F_r/F_s$ mit vorgegebenen Grenzwerten möglich war. Da die Differenzen für die Zerspankraftkomponente immer zwischen aufeinanderfolgenden Werten gleicher Arbeitsspindelposition gebildet werden, wirken sich periodisch auftretende Störeinflüsse nicht aus. Die Bezugswerte sind deshalb unabhängig vom speziellen Bearbeitungsfall und von der Art des Werkzeugbruches und brauchen daher nicht geändert zu werden.

Durch die Bildung der Differenzen der Zerspankraftkomponenten werden alle mit der Werkstückumdrehung periodischen Störsignale ausgeblendet. Die Differenz nimmt nur bei steilen Kraftänderungen große Werte an, so daß alle zulässigen Bearbeitungsbedingungen zu keinem Bruchsignal führen. Verhältnismässig große positive oder negative Kraftänderungen der Zerspankraftkomponenten am Anfang und am Ende eines Intervalls zeigen einen Werkzeugbruch an. Dies liefert große Differenzwerte mindestens für die Dauer einer Werkstückumdrehung oder aber, wenn entsprechend dem Werkstückrohling der Schnitt innerhalb einer Umdrehung unterbrochen ist, für den Teil der Werkstückumdrehung, in dem das Werkzeug vor dem Bruch schneidend im Eingriff war.

Eine besonders zuverlässige Überwachung der Bearbeitungsbedingungen und eine Brucherkennung wird erreicht, wenn sowohl die absolute Größe der Zerspankraftkomponenten wie auch der Verlauf der jeweiligen Differenzwerte und der Verlauf der Verhältniswerte $F_v/F_s$ und $F_r/F_s$ bzw. die relative Änderung dieser Verhältniswerte überwacht werden.

Im folgenden wird nun die Erfindung anhand einer in den Figuren schematisch dargestellten Drehbearbeitung beschrieben und näher erläutert. Diese Beschreibung ist sinngemäß auch auf Werkzeugmaschinen mit rotierendem Werkzeug zu übertragen.

Es zeigen :

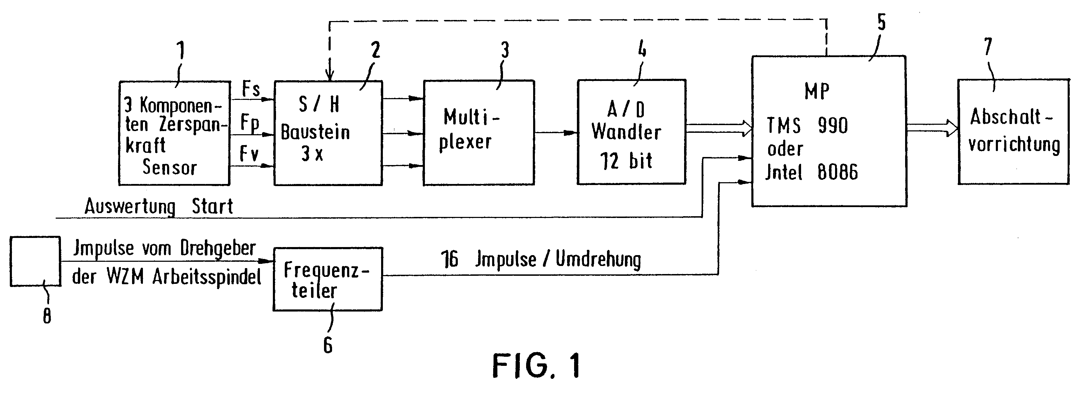

Fig. 1 ein Blockschaltbild der zur Überwachung dienenden Vorrichtung,

Fig. 2 und 3 jeweils ein Ablaufdiagramm für die Verarbeitung der Meßwerte,

die Figur 4 zeigt schematisch einen Verlauf für die Differenz $\Delta F$, wie er im Falle eines Anschnittes auftreten kann,

die Figur 5 zeigt verschiedene Möglichkeiten für den Verlauf $\Delta F$ im Falle eines Werkzeugbruches.

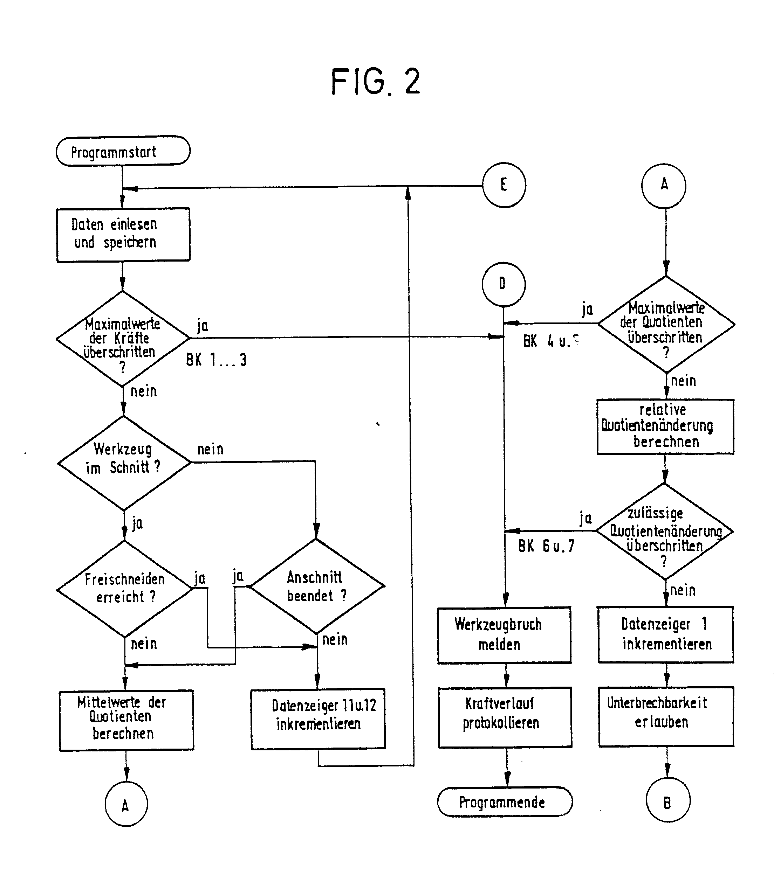

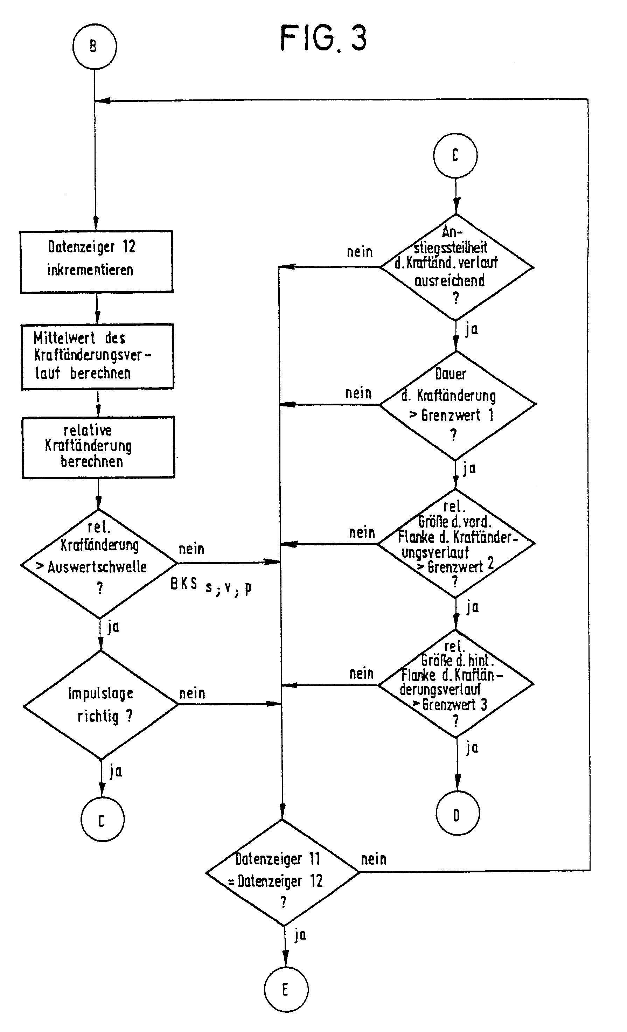

Am Werkzeugträger der Werkzeugmaschine ist ein Drei-Komponentenzerspankraftsensor 1 befestigt. Dieser Drei-Komponenten erspankraftsensor liefert analoge Meßwerte der Hauptschnittkraft $F_s$, der Vorschubkraft $F_v$ und der Passivkraft oder Rückkraft $F_r$ an je einem S/H (sample and hold) — Baustein 2, der die fehlerfreie Übertragung der Meßsignale zu einem Analog-Digitalwandler 4 sicherstellt. Die S/H Bausteine werden nacheinander durch einen Multiplexer 3 mit dem Analog-Digitalwandler 4 verbunden. Vom A/D-Wandler 4 werden die Werte in einen Microprocessor 5 eingegeben, der die Werte entsprechend dem in Figur 2 dargestellten Diagramm auswertet. Dabei wird jeder eingelesene Wert einem von der Arbeitsspindel gelieferten Impuls zugeordnet. Bei Verwendung eines normalen Drehgebers an der Arbeitsspindel kann die benötigte Impulszahl durch einen Frequenzteiler 6 erzeugt werden. In den Figuren 2 und 3 ist die Arbeitsweise der erfindungsgemäßen Vorrichtung mit Flussdiagrammen beschrieben, in denen sich die Bruchkriterien widerspiegeln.

Da zu jedem Impuls ein Wert von allen Zerspankraftkomponente eingelesen wird, die Werte von mindestens zwei Umdrehungsintervallen der Arbeitsspindel zur Bildung der Mittelwerte und der Differenzwerte gespeichert sein müssen, sind Datenanzeiger 11 und 12 vorhanden, die die Reihenfolge und Anzahl der Werte überwachen. Diese Datenzeiger kennzeichnen das Speicherfeld, in dem die eingelesenen Meßwerte zur weiteren Auswertung gespeichert werden. Der Datenzeiger wird nach jedem eingelesenen Wert um 1 erhöht (inkrementiert). Am Ende des Speicherfeldes kehrt der Datenzeiger zum Anfang zurück.

Entsprechend dem Ablaufdiagramm in Figur 2 werden nach dem Programmstart zunächst vorgegebene Grenzwerte für die einzelnen Zerspankraftkomponenten, für Verhältniswerte oder auch für Differenzwerte $\Delta F$ der Zerspankraftkomponenten eingelesen und gespeichert. Anhand der Bruchkriterien wird sodann untersucht, ob die Maximalwerte für $F_s$, $F_v$ und $F_r$ überschritten sind. Diese drei Grenzwerte bilden die Bruchkriterien (BK) 1 bis 3. Sind die Maximalwerte der Zerspankraftkomponenten nicht überschritten, so muß überprüft werden, ob das Werkzeug überhaupt im Schnitt ist. Diese Feststellung geschieht anhand des Überschreitens minimaler Kraftgrenzen für die Vorschubkraft und Hauptschnittkraft ; so wird beispielsweise das Vorliegen des Schnitts gemeldet, wenn $F_s$ größer als 250 N oder $F_v$ größer als 180 N ist.

Ist festgestellt, daß das Werkzeug im Schnitt ist, so muß geprüft werden, ob bereits das Freischneiden erreicht ist. Der Freischneidbereich wird durch Änderungen der Kraftkomponenten erkannt. Bedingung

4

für den Freischnitt ist, daß die Werte für die Hauptschnittkraft $F_s$ oder die Vorschubkraft $F_v$ über einen Teilbereich einer Werkstückumdrehung (z. B. 0,8) um 25 % kleiner als der Mittelwert der vorangegangenen Werte über eine volle Werkstückumdrehung sind.

Wurde festgestellt, daß das Werkzeug sich nicht im Schnitt befindet, so wird überprüft, ob sich die Bearbeitung des Werkstücks noch im Anschnittstadium befindet. Bedingung für den Anschnitt ist, daß die Werte von Hauptschnittkraft und Vorschubkraft über einen Teilbereich einer Werkstückumdrehung (z. B. 0,4) um einen bestimmten Wert größer als der Mittelwert der vorangegangenen Meßwerte über eine volle Werkstückumdrehung sind. Liegen Anschnittbedingungen vor, so beginnt die Auswertung erst 0,5 bis 2,5 Umdrehungen später.

Ist das Werkzeug im Schnitt und liegen keine Feischneidbedingungen vor, so werden sodann die Mittelwerte der Quotienten $Q_1 = F_v/F_s$, $Q_2 = F_r/F_s$ berechnet und es wird festgestellt, ob diese Quotienten bestimmte Maximalwerte überschreiten. Ist dies der Fall, so wird Werkzeugbruch gemeldet. Ist dies nicht der Fall, so wird die relative Quotientenänderung

$$\frac{\Delta(F_v/F_s)}{F_v/F_s}$$

bzw. die entsprechende relative Quotientenänderung für $F_r/F_s$ berechnet. Ist die zulässige relative Quotientenänderung überschritten, so wird ebenfalls Werkzeugbruch gemeldet.

Die Feststellung der Maximalwerte für $Q_1$ und $Q_2$ stellen die Bruchkriterien (BK) 4 und 5 dar, die relative Quotientenänderung die Bruchkriterien BK 6 und 7.

Ist auch die zulässige relative Quotientenänderung nicht überschritten, so wird der in Figur 3 dargestellte Verlauf des Prüfprogramms durchgeführt. Nach Inkrementieren des Datenzeigers 12 wird der Mittelwert der Änderungen der einzelnen Zerspankraftkomponenten berechnet. Hieraus wird die relative Änderung der Zerspankraftkomponenten berechnet und sodann geprüft, ob diese relative Änderung eine bestimmte Schwelle überschritten hat. Ist dies der Fall, so wird anschließend die Anstiegssteilheit des Kraftänderungsverlaufes und die Dauer der Kraftänderung bestimmt. Sind hier bestimmte Grenzwerte überschritten, so wird ein Werkzeugbruch gemeldet, der Kraftverlauf protokolliert und das Programm beendet.

Die erwähnte Mittelwertbildung des Kraftänderungsverlaufs erfolgt anhand der Einzeldifferenzen zwischen zwei in derselben Winkelstellung des Werkstücks eingelesenen Werten. Ihre Bildung erfolgt fortlaufend, wobei der aktuell eingelesene Wert neu hinzugerechnet und der älteste Wert substrahiert wird.

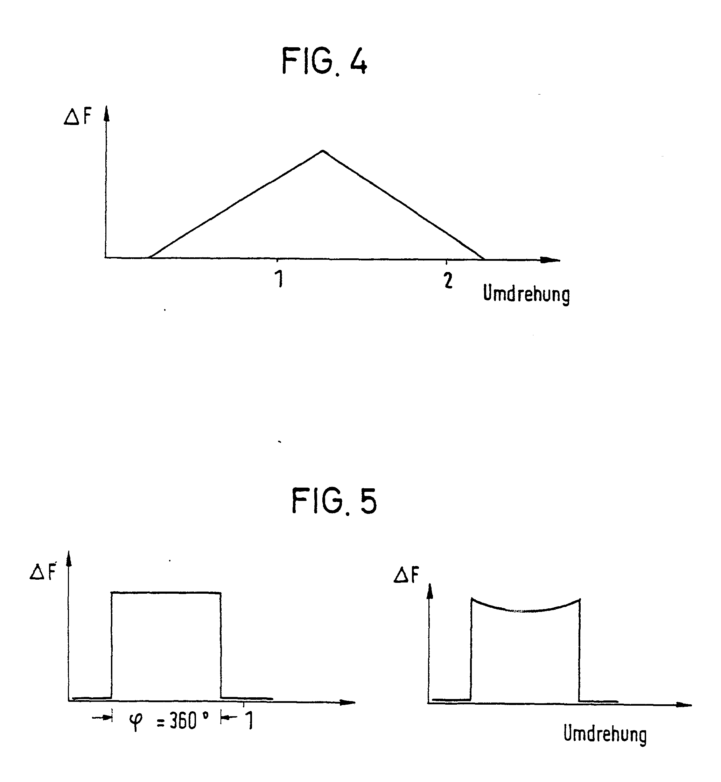

Zur Illustration sind in den Figuren 4 und 5 verschiedene Bedingungen für den Verlauf der Differenzen $\Delta F$ der Zerspankraftkomponenten dargestellt. Dabei zeigt die Figur 4 einen Verlauf, bei dem die Differenzfunktion $\Delta F$ zunächst bis zu einem gewissen Punkt ansteigt und dann in entsprechendem Maße wieder abfällt. Ein solches Verhalten liegt beispielsweise bei einem normalen Anschnitt vor.

Figur 5 zeigt verschiedene Verläufe von $\Delta F$, die charakteristisch für einen Werkzeugbruch sind. Dabei ist ein wesentliches Merkmal, daß die ansteigende und die abfallende Flanke der Funktion $\Delta F$ um eine volle Umdrehung oder ein ganzzahliges Vielfaches einer vollen Umdrehung auseinanderliegen. Dieses Kriterium wird — wie bereits ausgeführt — mit zur Erkennung eines Werkzeugbruches ausgenützt.

**Patentansprüche**

1. Verfahren zum Überwachen des Werkzeugzustandes einer Werkzeugmaschine während der Bearbeitung eines Werkstückes durch drehende Relativbewegung zwischen dem Werkstück und dem Werkzeug, und bei dem die auf das Werkzeug wirkenden Komponenten der Zerspankraft, nämlich die Vorschubkraft $F_V$, die Rückkraft $F_r$ und die Hauptschnittkraft $F_s$ bei jeder Umdrehung in einer bestimmten Winkelstellung gemessen und gespeichert werden, dadurch gekennzeichnet, daß bei jeder Umdrehung in m verschiedenen, für jede Umdrehung gleichen relativen Winkelstellungen zwischen Werkstück und Werkzeug die Zerspankraftkomponenten $F_v$, $F_r$, und $F_s$ gemessen werden, ferner die Mittelwerte $MF_v$, $MF_r$ und $MF_s$ der Komponenten $F_v$, $F_r$ und $F_s$ über jeweils eine Umdrehung gebildet werden, weiterhin aus den Mittelwerten $MF_v$, $MF_r$, und $MF_s$ Verhältnis-Mittelwerte

$$\bar{Q}_1 = \frac{MF_v}{MF_s} \text{ und } \bar{Q}_2 = \frac{MF_r}{MF_s}$$

gebildet werden, und daß die Werkzeugmaschine abgeschaltet wird, wenn einer der Mittelwerte $MF_v$, $MF_r$ und $MF_s$ und/oder der Verhältnis-Mittelwert $\bar{Q}_1$, $\bar{Q}_2$ einen vorgegebenen Grenzwert übersteigt.

2. Verfahren nach Anspruch 1, dadurch gekennzeichnet, daß bei jeder Umdrehung für jede Winkelstellung die Verhältnisse

5

$$Q_1^i = \frac{F_{v^i}}{F_{s^i}} \text{ und } Q_2^i = \frac{F_{r^i}}{F_{s^i}}$$

mit i = 1,2 ... m gebildet und gespeichert werden, daß dann die für einander entsprechende Winkelstellungen in jeweils zwei aufeinanderfolgenden Umdrehungen (n-1) und n erhaltenen Verhältniswerte $Q_1^i$,(n) und $Q_1^i$,(n-1) bzw. $Q_2^i$,(n) und $Q_2^i$,(n-1) subtrahiert werden, daß für jede der m Winkelstellungen die Quotienten

$$\Delta Q_1^i = \frac{Q_{1,(n)}^i - Q_{1,(n-1)}^i}{\bar{Q}_1}$$

und

$$\Delta Q_2^i = \frac{Q_{2,(n)}^i - Q_{2,(n-1)}^i}{\bar{Q}_2}$$

gebildet werden, und die Werkzeugmaschine abgeschaltet wird, wenn eine der Größen $\Delta Q_1^i$, $\Delta Q_2^i$ einen vorgegebenen Grenzwert überschreitet.

3. Verfahren nach Anspruch 1, dadurch gekennzeichnet, daß zusätzlich die für einander entsprechende Winkelstellungen in zwei jeweils aufeinanderfolgenden Umdrehungen erhaltenen Komponentenwerte zur Bildung von Differenzwerten $\Delta F^i$ (i = 1,2 ... m) subtrahiert werden, daß die Differenzwerte $\Delta F^i$ mit einem vorgegebenen Grenzwert und der Verlauf der Differenzwerte $\Delta F^i$ über mehrere Umdrehungen mit einem vorgegebenen Verlauf verglichen werden, und daß die Werkzeugmaschine abgeschaltet wird, wenn der vorgegebene Grenzwert überschritten oder wenn der gemessene Verlauf mit dem vorgegebenen Verlauf übereinstimmt.

4. Verfahren zum Überwachen des Werkzeugzustandes einer Werkzeugmaschine während der Bearbeitung eines Werkstückes durch drehende Relativbewegung zwischen dem Werkstück und dem Werkzeug, und bei dem die auf das Werkzeug wirkenden Komponenten der Zerspankraft, nämlich die Vorschubkraft $F_v$, die Rückkraft $F_r$ und die Hauptschnittkraft $F_s$ bei jeder Umdrehung in einer bestimmten Winkelstellung gemessen und gespeichert werden, dadurch gekennzeichnet, daß bei jeder Umdrehung in m verschiedenen, für jede Umdrehung gleichen relativen Winkelstellung zwischen Werkstück und Werkzeug die Zerspankraftkomponente $F_v$, $F_r$ und $F_s$ gemessen werden, daß die für einander entsprechende Winkelstellungen in zwei jeweils aufeinanderfolgenden Umdrehungen erhaltenen Komponentenwerte zur Bildung von Differenzwerten $\Delta F^i$ (i = 1,2 ... m) subtrahiert werden, daß die Differenzwerte $\Delta F^i$ mit einem vorgegebenen Grenzwert und der Verlauf der Differenzwerte $\Delta F^i$ über mehrere Umdrehungen mit einem vorgegebenen Verlauf verglichen werden, und daß die Werkzeugmaschine abgeschaltet wird, wenn der vorgegebene Grenzwert überschritten oder der gemessene Verlauf mit dem vorgegebenen Verlauf übereinstimmt.

5. Vorrichtung zur Durchführung des Verfahrens nach Anspruch 1, mit einer Werkzeugmaschine zur Bearbeitung eines Werkstückes durch drehende Relativbewegung zwischen dem Werkstück und dem Werkzeug, mit Meßeinrichtungen zur Messung der auf das Werkzeug wirkenden Zerspankraftkomponenten und Einrichtungen zur Bildung von Verhältniswerten

$$Q_1 = \frac{F_v}{F_s} \text{ und } Q_2 = \frac{F_r}{F_s}$$

aus den Meßsignalen für die Vorschubkraft $F_v$ sowie die Rückkraft $F_r$ mit dem Meßsignal der Hauptschnittkraft $F_s$, und mit einer Abschalteinrichtung, dadurch gekennzeichnet, daß die Meßeinrichtung Meßfühler zum Ermitteln einer entsprechenden Zahl von m Meßsignalen für die einzelnen Zerspankraftkomponenten $F_v$, $F_r$, $F_s$ in m verschiedenen Winkelstellungen des Werkstücks innerhalb einer Werkstückumdrehung aufweist, und daß Mittelwertbildner zur Ermittlung der Mittelwerte $MF_v$, $MF_r$, $MF_s$ aus den m Meßsignalwerten der Zerspankraftkomponenten $F_v$, $F_r$, $F_s$, ein Dividierer zur Bildung der Verhältnisse

$$\bar{Q}_1 = \frac{MF_v}{MF_s} \text{ und } \bar{Q}_2 = \frac{MF_r}{MF_s}$$

und eine Speicheranordnung zur Speicherung von Grenzwerten für die Mittelwerte $MF_v$, $MF_r$, $MF_s$ und $\bar{Q}_1$, $\bar{Q}_2$ vorhanden sind.

6. Vorrichtung nach Anspruch 5, dadurch gekennzeichnet, daß die Zahl m der Meßsignale mehr als 2, insbesondere 16 beträgt.

7. Vorrichtung nach Anspruch 5 oder 6, dadurch gekennzeichnet, daß an einem 3-Komponenten-Zerspankraftsensor (1)S/H-Bausteine (2) angeschlossen sind, welche mit einem Multiplexer (3) verbunden sind, daß dem Multiplexer (3) ein Analog-Digitalwandler (4) nachgeschaltet ist und der Datenausgang des A/D-Wandlers (4) mit dem Dateneingang eines Mikroprozessors (5) verbunden ist, daß an einen Taktimpulseingang des Mikroprozessors (5) ein Frequenzteiler (6) und an diesen ein an der Drehspindel befindlicher Drehgeber (8) angeschlossen ist, und daß an einen Ausgang des Mikroprozessors (5) die Abschalteinrichtung (7) angeschlossen ist.

**Claims**

1. A process for monitoring the condition of a tool of a machine tool during the machining of a workpiece by relative rotary movement of the tool and the workpiece, and wherein the components of the machining force acting on the workpiece, namely the feeding force $F_v$, the return force $F_r$ and the main cutting force $F_s$, are measured at a given angular position during each revolution and are stored, characterised in that during each revolution the components $F_v$, $F_r$ and $F_s$ of the cutting force are measured in m different relative angular positions of workpiece and tool, the same for each revolution ; the mean values $MF_v$, $MF_r$ and $MF_s$ of the component $F_v$, $F_r$ and $F_s$ are each calculated over a revolution ; relative mean values

$$\bar{Q}_1 = \frac{MF_v}{MF_s} \text{ and } \bar{Q}_2 = \frac{MF_r}{MF_s}$$

are calculated from the mean values $MF_v$, $MF_r$ and $MF_s$ ; and the machine tool is turned off if one of the mean values $MF_v$, $MF_r$ and $MF_s$ and/or of the relative mean values $\bar{Q}_1$, $\bar{Q}_2$ exceeds a predetermined limiting value.

2. A process according to claim 1, characterised in that for each revolution the ratios

$$Q_1^i = \frac{F_{v^i}}{F_{s^i}} \text{ and } Q_2^i = \frac{F_{r^i}}{F_{s^i}}$$

where i = 1,2 ... m, are calculated for each angular position and stored, that the relative values of $Q_1^i$,(n) and $Q_1^i$,(n-1) or $Q_2^i$,(n) and $Q_2^i$,(n-1) obtained in each two successive revolutions (n-1) and n are subtracted, and that for each of the angular positions the quotients :

$$\Delta Q_1^i = \frac{Q_{1,(n)}^i - Q_{1,(n-1)}^i}{\bar{Q}_1}$$

and

$$\Delta Q_2^i = \frac{Q_{2,(n)}^i - Q_{2,(n-1)}^i}{\bar{Q}_2}$$

are calculated, and that the machine tool is turned off if one of the values $\Delta Q_1^i$, $\Delta Q_2^i$ exceeds a predetermined limiting value.

3. A process according to claim 1, characterised in that in addition the component values for the calculation of differential values $\Delta F^i$ (i = 1,2 ... m) obtained for corresponding angular positions in two successive revolutions are subtracted, that the differential values $\Delta F^i$ are compared with a predetermined limiting value and the characteristic of the differential values $\Delta F^i$ over a plurality of revolutions is compared with a predetermined characteristic, and that the machine tool is turned off if the predetermined limiting value is exceeded or if the measured characteristic matches the predetermined characteristic.

4. A process for monitoring the condition of a tool of a machine tool during the machining of a workpiece by relative rotational movement of the workpiece and the tool, and in which the components of the machining force acting on the workpiece, namely the feeding force $F_v$, the return force $F_r$ and the main cutting force $F_s$, are measured at a given angular position in each rotation and are stored, characterised in that during each rotation the components $F_v$, $F_r$ and $F_s$ of the machining force are measured in m different relative angular positions of workpiece and tool, the same for each revolution, that the values of the components obtained for corresponding angular positions in two successive rotations are subtracted to give differential values $\Delta F^i$ (i = 1,2 ... m), that the differential values $\Delta F^i$ are compared with a predetermined limiting value and the characteristic of the differential values $\Delta F^i$ over a

plurality of revolutions is compared with a predetermined characteristic, and that the machine tool is turned off if the predetermined limiting value is exceeded or if the measured characteristic matches the predetermined characteristic.

5. A device for carrying out the process according to claim 1 with a machine tool for machining a workpiece by relative rotary movement of the workpiece and tool, having measuring devices for measuring the components of the machining force acting on the workpiece and devices for calculating relative values

$$Q_1 = \frac{F_v}{F_s} \text{ and } Q_2 = \frac{F_r}{F_s}$$

from the measurement signals for the feeding force $F_v$ and the return force $F_r$ with the measurement signal of the main cutting force $F_s$, and having a cut-out switch, characterised in that the measuring device has measuring feelers to detect a corresponding number of m measurement signals for the individual components $F_v$, $F_r$, $F_s$ of the machining force at m different angular positions of the workpiece within one revolution of the workpiece, and that mean value calculators for determining the mean values $MF_v$, $MF_r$, $MF_s$ from the measurement signal values of the components $F_v$, $F_r$, $F_s$ of the machining force, a divider for calculating the ratios

$$\bar{Q}_1 = \frac{MF_v}{MF_s} \text{ and } \bar{Q}_2 = \frac{MF_r}{MF_s}$$

and a storage device for storing limiting values for the mean values $MF_v$, $MF_r$ and $MF_s$ and $\bar{Q}_1$, $\bar{Q}_2$ are present.

6. A device according to claim 5, characterised in that the number m of the measurement signals is more than 2, and in particular is 16.

7. A device according to claim 5 or claim 6, characterised in that S/H components (2) are connected to a 3-component machining force sensor (1) and are connected to a multiplexer (3), that an analog-digital converter (4) is connected in series after the multiplexer (3), and the data output of the A/D converter (4) is connected to the data input of a microprocessor (5), that connected to a timing pulse input of the microprocessor (5) is a frequency divider (6), and connected to this is a revolution counter (8) mounted on the work spindle, and that the cut-out device is connected to an outlet of the microprocessor (5).

**Revendications**

1. Procédé permettant de surveiller les conditions d'usinage sur une machine-outil pendant l'usinage d'une pièce par déplacement relatif en rotation entre cette pièce et l'outil, selon lequel, à chaque tour, on mesure dans une position angulaire déterminée et on met en mémoire les composantes de la force de coupe qui agissent sur la pièce, à savoir la force d'avance $F_v$, la force de réaction $F_r$ et la force principale de coupe $F_s$, caractérisé en ce que, à chaque tour, on mesure les composantes $F_v$, $F_r$ et $F_s$ de la force de coupe en m différentes positions angulaires relatives, identiques à chaque tour, entre la pièce et l'outil, on forme par ailleurs les valeurs moyennes $MF_v$, $MF_r$ et $MF_s$ de ces composantes $F_v$, $F_r$ et $F_s$ à chaque fois sur un tour et on forme ensuite, à partir de ces valeurs moyennes $MF_v$, $MF_r$ et $MF_s$, des valeurs moyennes de rapport :

$$\bar{Q}_1 = \frac{MF_v}{MF_s} \text{ et } \bar{Q}_2 = \frac{MF_r}{MF_s}$$

et en ce qu'on met la machine-outil à l'arrêt lorsque l'une des valeurs moyennes ($F_v$, $MF_r$ et $MF_s$ et/ou des valeurs moyennes de rapport $\bar{Q}_1$ et $\bar{Q}_2$ dépasse une valeur limite préfixée.

2. Procédé suivant la revendication 1, caractérisé en ce que, à chaque tour et pour chaque position angulaire, on forme et met en mémoire les rapports :

$$Q_1^i = \frac{F_v^i}{F_s^i} \text{ et } Q_2^i = \frac{F_r^i}{F_s^i}$$

pour i = 1,2 ... m, en ce qu'on soustrait alors les valeurs de rapport $Q_1^i$,(n) et $Q_1^i$,(n-1), ou $Q_2^i$,(n) et $Q_2^i$,(n-1), obtenues à chaque fois pour des positions angulaires se correspondant sur deux tours successifs (n-1) et (n), en ce que, pour chacune des m positions angulaires, on forme les quotients :

8

$$\Delta Q_1^i = \frac{Q_{1,(n)}^i - Q_{1,(n-1)}^i}{\bar{Q}_1}$$

et

$$\Delta Q_2^i = \frac{Q_{2,(n)}^i - Q_{2,(n-1)}^i}{\bar{Q}_2}$$

et on met la machine-outil à l'arrêt lorsque l'une des grandeurs $\Delta Q_1^i$ ou $\Delta Q_2^i$ dépasse une valeur limite préfixée.

3. Procédé suivant la revendication 1, caractérisé en ce qu'en supplément, on soustrait, pour former des valeurs de différence $\Delta F^i$ (i = 1,2 ... m), les valeurs des composantes obtenues à chaque fois pour des positions angulaires se correspondant sur deux tours successifs, en ce qu'on compare ces valeurs de différence $\Delta F^i$ avec une valeur limite préfixée et la variation de ces valeurs de différence $\Delta F$ sur plusieurs tours avec une variation préfixée et en ce qu'on met la machine-outil à l'arrêt lorsque la valeur limite préfixée est dépassée ou lorsque la variation mesurée coïncide avec la variation préfixée.

4. Procédé permettant de surveiller les conditions d'usinage sur une machine-outil pendant l'usinage d'une pièce par déplacement relatif en rotation entre cette pièce et l'outil, selon lequel, à chaque tour, on mesure dans une position angulaire déterminée et on met en mémoire les composantes de la force de coupe qui agissent sur la pièce, à savoir la force d'avance $F_v$, la force de réaction $F_r$ et la force principale de coupe $F_s$, caractérisé en ce que, à chaque tour, on mesure les composantes $F_v$, $F_r$ et $F_s$ de la force de coupe en m différentes positions angulaires relatives, identiques à chaque tour, entre la pièce et l'outil, en ce qu'on soustrait, pour former des valeurs de différence $\Delta F^i$ (i = 1,2 ... m), les valeurs des composantes obtenues à chaque fois pour des positions angulaires se correspondant sur deux tours successifs, en ce qu'on compare ces valeurs de différence $\Delta F^i$ avec une valeur limite préfixée et la variation de ces valeurs de différence $\Delta F^i$ sur plusieurs tours avec une variation préfixée et en ce qu'on met la machine-outil à l'arrêt lorsque la valeur limite préfixée est dépassée ou lorsque la variation mesurée coïncide avec la variation préfixée.

5. Dispositif de mise en œuvre du procédé suivant la revendication 1, comprenant une machine-outil destinée à l'usinage d'une pièce par déplacement relatif en rotation entre cette pièce et l'outil, des dispositions permettant de mesurer les composantes de la force de coupe qui agissent sur la pièce et des dispositifs permettant de former des valeurs de rapport

$$Q_1 = \frac{F_v}{F_s} \quad \text{et} \quad Q_2 = \frac{F_r}{F_s}$$

formées en divisant les signaux de mesure obtenus pour la force d'avance $F_v$, ainsi que la force de réaction $F_r$, par le signal de mesure de la force principale de coupe $F_s$, ainsi qu'un dispositif de mise à l'arrêt, caractérisé en ce que le dispositif de mesure comprend des capteurs permettant de fournir un nombre approprié de m signaux de mesure pour les différentes composantes $F_v$, $F_r$ et $F_s$ de la force de coupe dans m positions angulaires différentes de la pièce au cours d'un tour de cette pièce et en ce qu'il est prévu des moyens de formation de valeur moyenne permettant d'élaborer les valeurs moyennes ($MF_v$, $MF_r$ et $MF_s$ à partir des m valeurs des signaux de mesure correspondants aux composantes $F_v$, $F_r$ et $F_s$ de la force de coupe, un diviseur permettant de former les rapports

$$\bar{Q}_1 = \frac{MF_v}{MF_s} \quad \text{et} \quad \bar{Q}_2 = \frac{MF_r}{MF_s}$$

et un circuit de mémoire permettant de stocker les valeurs limites pour les valeurs moyennes $MF_v$, $MF_r$, $MF_s$ et $\bar{Q}_1$, $\bar{Q}_2$.

6. Dispositif suivant la revendication 5, caractérisé en ce que le nombre m des signaux de mesure vaut plus que 2, notamment 16.

7. Dispositif suivant la revendication 5 ou 6, caractérisé en ce qu'il est prévu, raccordés à un capteur de force de coupe à trois composantes (1), des blocs fonctionnels d'échantillonnage et de maintien (2) qui sont reliés à un multiplexeur (3), en ce qu'un convertisseur analogique/numérique (4) est branché en aval de ce multiplexeur (3) et la sortie de données de ce convertisseur A/N (4) est reliée à l'entrée de données d'un microprocesseur (5), en ce qu'un diviseur de fréquence (6) est raccordé à une entrée d'impulsions de synchronisation du microprocesseur (5) et un capteur de vitesse de rotation (8) se trouvant sur la broche de tournage est raccordé à ce diviseur et en ce que le circuit de mise à l'arrêt (7) est raccordé à une sortie du microprocesseur (5).

FIG. 1

EP 0 052 802 B1

# FIG. 2

# FIG. 3

# FIG. 4

# FIG. 5

4